# FASCICULE DE BREVET EUROPEEN

(11) **EP 0 893 157 B1**
(45) Date de publication et mention de la délivrance du brevet: **16.02.2005**
(21) Numéro de dépôt: 98401819.2
(22) Date de dépôt: 17.07.1998
(51) Int. Cl.: B01J 20/18, B01D 53/02, C01B 3/56, C01B 21/04

(54) **Adsorbant zéolitique aggloméré amélioré, son procédé d'obtention et son utilisation pour la séparation non-cryogénique de gaz industriels**
Gebundenes zeolithisches Adsorbens, Verfahren zu dessen Herstellung und dessen Verwendung bei der kryogenen Trennung von Prozessgas
Bounded zeolitic adsorbent, method for its production and its use for the non cryogenic separation of process gases

(30) Priorité: 22.07.1997 FR 9709284
(43) Date de publication de la demande: 27.01.1999
(73) Titulaire: CECA S.A., 92800 Puteaux (FR)
(72) Inventeur: Plee, Dominique, 64140 Lons (FR)
(74) Mandataire: Treuil, Claude

(56) Documents cités:
- EP-A- 0 196 043
- EP-A- 0 297 542
- EP-A- 0 486 384
- EP-A- 0 589 406
- EP-A- 0 842 697
- US-A- 3 119 660
- US-A- 3 906 076
- US-A- 5 174 979
- DATABASE WPI Section Ch, Week 9330 Derwent Publications Ltd., London, GB; Class A97, AN 93-239799 XP002061107 & JP 05 163015 A (TOSOH CORP) , 29 juin 1993
- DATABASE WPI Section Ch, Week 9207 Derwent Publications Ltd., London, GB; Class A81, AN 92-052718 XP002061115 & JP 03 295805 A (TOSOH CORP) , 26 décembre 1991
- DATABASE WPI Section Ch, Week 9431 Derwent Publications Ltd., London, GB; Class J01, AN 94-252505 XP002061089 & JP 06 183725 A (TOSOH CORP) , 5 juillet 1994
- DATABASE WPI Section Ch, Week 7723 Derwent Publications Ltd., London, GB; Class A81, AN 77-40881Y XP002080065 & JP 52 053787 A (TORAY IND INC) , 30 avril 1977

## Description

### DOMAINE TECHNIQUE

La présente invention est relative à des adsorbants pour la séparation non cryogénique des gaz industriels, et plus particulièrement pour la séparation de l'azote par adsorption dans des flux gazeux tels que l'air ainsi que la purification de l'hydrogène par adsorption de CO et/ou de N₂.

La séparation de l'azote de mélanges de gaz est à la base de plusieurs procédés non cryogéniques industriels, parmi lesquels la production d'oxygène à partir d'air par procédé PSA (mis pour Pressure Swing Adsorption : adsorption sous pression modulée) est l'un des plus importants. Dans cette application, l'air est comprimé et envoyé sur une colonne d'adsorbant ayant une préférence marquée pour la molécule d'azote. On produit ainsi pendant le cycle d'adsorption de l'oxygène à environ 94-95 % et de l'argon. Après une certaine durée, la colonne est dépressurisée puis maintenue à la pression basse, période pendant laquelle l'azote est désorbé. Une recompression est ensuite assurée au moyen d'une partie de l'oxygène produit et le cycle continue. L'intérêt de ce procédé par rapport aux procédés cryogéniques réside dans la plus grande simplicité des installations et une plus grande aisance dans leur maintenance. La qualité de l'adsorbant utilisé reste la clé d'un procédé efficace et compétitif. La performance de l'adsorbant est liée à plusieurs facteurs, parmi lesquels on peut citer: la capacité d'adsorption en azote, qui sera déterminante pour dimensionner les tailles de colonne, la sélectivité entre azote et oxygène qui conditionnera le rendement de production (rapport entre l'oxygène produit et oxygène entré), la cinétique d'adsorption qui permettra d'optimiser la durée des cycles et d'améliorer la productivité de l'installation.

### TECHNIQUE ANTERIEURE

L'utilisation de tamis moléculaires comme adsorbants sélectifs de l'azote est une technologie bien connue. La famille de zéolites ayant un diamètre de pores d'au moins 0,4 nm (4 Å) a été proposée par Mc ROBBIE dans US 3,140,931 pour la séparation de mélanges oxygène / azote. La performance comparée des différentes formes ioniques des zéolites été examinée par Mc KEE dans US 3,140,933, en particulier celle de la forme lithium présentée comme la plus efficace en termes de sélectivité. L'intérêt de cette zéolite est resté limité du fait de la difficulté d'échanger la structure faujasite en une forme lithium. Il est connu depuis CHAO (US 4,859,217) que c'est à fort taux d'échange, typiquement supérieur à 88 %, que se révèlent pleinement les potentialités d'un tel adsorbant. Sont exemplifiés
→ d'une part une zéolite X (Si/Al = 1,25) agglomérée par un liant qui est zéolitisé avant échange lithium
→ d'autre part un zéolite de Si/Al = 1,0 en poudre échangée au lithium.

L'échange au moyen de l'ion calcium étant plus facile, c'est vers des structures faujasites échangées calcium ou vers des structures faujasites échangées au moyen de deux ions divalents, calcium plus strontium, que les efforts se sont portés (voir par exemple les brevets US 4,554,378 de COE et US 4,455,736 de SIRCAR). Dans la divulgation de COE, il est indiqué que l'état d'hydroxylation des ions échangés est particulièrement important sur les performances et que cet état peut être obtenu par une activation thermique particulière.

La purification de l'hydrogène par adsorption est également un procédé industriel de grande importance. Il s'agit de récupérer l'hydrogène à partir d'un mélange de plusieurs constituants provenant du réformage catalytique du gaz naturel, des installations de production d'ammoniac ou des unités d'éthylène. On applique le principe de l'adsorption modulée en pression (PSA) pour obtenir de l'hydrogène de haute pureté. Les impuretés contenues dans l'hydrogène sont le plus souvent constituées de CO₂, NH₃, N₂, CO, CH₄ et d'hydrocarbures en C₁-C_{4,} à des teneurs allant de quelques ppm à quelques pour-cent. Dans la pratique, on emploie un lit composé d'alumine ou de gel de silice pour retenir l'eau, de charbon actif pour retenir CO₂ et CH₄ et de tamis moléculaire pour piéger CO et N₂.

La première installation industrielle, qui date de 1967, est décrite par UCC dans US 3,430,418, et jusqu'à présent, l'adsorbant zéolitique utilisé est un tamis moléculaire de type 5A.

L'Air Liquide a décrit dans WO 97/45363 un procédé de séparation de l'hydrogène contenu dans un mélange gazeux pollué par CO et renfermant au moins une autre impureté choisie dans le groupe constitué par du CO₂ et des hydrocarbures linéaires, ramifiés ou cycliques, saturés ou insaturés en C₁-C₈ ainsi que l'azote, comprenant la mise en contact du mélange gazeux à purifier avec le lit d'un premier adsorbant sélectif d'au moins le dioxyde de carbone et les hydrocarbures C₁-C₈, puis avec le lit d'un adsorbant particulier à l'azote (susceptible d'adsorber la majeure partie de l'azote présent dans le mélange gazeux) tel que la zéolite 5 A et enfin le lit d'un troisième adsorbant qui est une zéolite du type faujasite échangée à au moins 80 % au lithium et dont le rapport Si/AI est inférieur à 1,5 pour éliminer le monoxyde de carbone.

Vu l'importance des procédés de séparation non-cryogéniques de gaz industriels mettant en oeuvre des tamis moléculaires, la découverte d'adsorbants de plus en plus performants constitue un objectif important, à la fois pour les sociétés productrices de gaz et pour les sociétés fournissant les tamis moléculaires.

### EXPOSE DE L'INVENTION

Dans la présente invention, il est question d'adsorbants agglomérés. Traditionnellement, les adsorbants agglomérés sont constitués d'une poudre de zéolite, qui constitue l'élément actif, et d'un liant destiné à assurer la cohésion des cristaux sous forme de grains. Ce liant n'a aucune propriété adsorbante, sa fonction étant de conférer au grain une résistance mécanique suffisante pour résister aux vibrations et aux mouvements auquel il est soumis au cours des opérations de pressurisation et dépressurisation de la colonne.

Divers moyens ont été proposés pour pallier cet inconvénient du liant d'être inerte quant aux performances adsorbantes, parmi lesquels la transformation du liant, pour tout ou partie, en zéolite. Cette opération s'effectue facilement lorsqu'on utilise des argiles de la famille de la kaolinite, préalablement calcinées à des températures comprises entre 500°C et 700°C. Une variante consiste à fabriquer des grains de kaolin pur et à les zéolitiser : son principe est exposé dans "ZEOLITE MOLECULAR SIEVES" de D.W. BRECK, John Wiley and Sons, NEW YORK. La technologie en question a été appliquée avec succès à la synthèse de grains de zéolite A ou X, constitués jusqu'à 95 % en poids de la zéolite elle-même et d'un résiduel de liant non transformé (voir à cet effet HOWELL, US 3,119,660). D'autres liants appartenant à la famille de la kaolinite, comme l'halloysite, ont été transformés en zéolite, l'ajout d'une source de silice étant recommandé lorsque l'on veut obtenir une zéolite X ("ZEOLITE MOLECULAR SIEVES", BRECK, p. 320).

KUZNICKI et collaborateurs ont montré (US 4,603,040) que l'on peut transformer un aggloméré de kaolin en zéolite X de rapport Si/AI égal à 1. La réaction, pour être pratiquement complète, c'est-à-dire pour aboutir à la formation d'un grain constitué par environ 95 % de zéolite X, requiert cependant quelques 10 jours à 50°C, ce qui rend l'opération industriellement irréalisable. Elle est menée en combinant une période de mûrissement de 5 jours à 40°C avec une cristallisation consécutive à plus haute température.

JP-05163015 (Tosoh Corp.) enseigne que l'on peut former des grains de zéolite X à rapport Si/AI faible, de l'ordre de 1,0 en mélangeant une poudre de zéolite X de rapport Si/AI = 1 avec du kaolin, de la potasse, de la soude et de la carboxyméthylcellulose. On met en forme par extrusion. Les grains ainsi obtenus sont séchés, calcinés à 600°C pendant 2 heures puis immergés dans une solution de soude et de potasse à 40°C pendant 2 jours.

En suivant les enseignements de ces deux documents, on peut préparer des solides résistants mécaniquement, constitués pour partie majoritaire de zéolite X dont le rapport Si/AI est sensiblement inférieur à celui des zéolites X classiquement fabriquées par la voie gel dont le rapport Si/AI se situe entre 1,1 et 1,5. Ces procédés sont lourds et pèchent, soit par la durée excessive de réaction, soit par le nombre d'étapes mises en jeu. Il est d'autre part à craindre que le traitement thermique tel que revendiqué dans JP 05-163015, après l'étape de mise en forme, ne contribue à l'amorphisation du grain et que la digestion caustique qui suit ait pour objet de la recristalliser, ce qui expliquerait la lenteur du procédé.

Dans la présente demande, on réserve la dénomination LSX (mise pour Low Silica X) au pôle des zéolites X à faible rapport Si/AI, à savoir les zéolites X à rapport Si/Al = 1, en acceptant des écarts expérimentaux raisonnables autour de cette valeur unitaire, les valeurs inférieures correspondant très certainement à des imprécisions de la mesure, et les valeurs supérieures à la présence d'inévitables impuretés à plus forte teneur en silice et contenant des ions sodium et éventuellement des ions potassium. On montre ici que l'on peut préparer des corps zéolitiques agglomérés constitués d'au moins 95 % de zéolite LSX, en utilisant un procédé beaucoup plus simple et plus rapide, et qu'à partir de ces corps, et que par échange au lithium on peut réaliser des adsorbants particulièrement performants non seulement en séparation azote / oxygène mais également en séparation azote-monoxyde de carbone / hydrogène.

### MANIERES DE REALISER L'INVENTION

Le procédé par lequel on obtient des corps agglomérés en zéolite LSX échangée au lithium (ci-après LiLSX) selon l'invention comprend les opérations suivantes :
- a) on soumet des corps en zéolite LSX à un ou plusieurs échanges successifs avec une solution de chlorure de lithium à une température d'environ 100°C,
   et éventuellement à l'échange des sites cationiques échangeables de la LSX avec des ions des Groupes IA, IIA, IIIA, IIIB de la classification périodique, les ions trivalents de la série des lanthanides ou terres-rares, l'ion zinc (II), l'ion cuivrique (II), l'ion chromique (III), l'ion ferrique (III), l'ion ammonium et/ou l'ion hydronium, les ions préférés étant les ions calcium, strontium, zinc et terres-rares,
- b) on lave de façon répétée les corps échangés sous a), jusqu'à ce qu'on atteigne une faible teneur en chlorures sur le solide (inférieure à 0,02 % en poids),
- c) on sèche et on active thermiquement les produits lavés sous b) selon un mode ne produisant pas une dégradation hydrothermale de la structure zéolitique,
les corps de zéolite LSX étant les produits issus des opérations suivantes :
- i) agglomération d'une poudre de zéolite LSX avec un liant contenant au moins 80 % d'une argile zéolitisable,
- ii) la mise en forme du mélange obtenu sous i),
- iii) son séchage, puis sa calcination à une température de 500 à 600 °C,
- iv) la mise en contact du produit solide résultant de iii) avec une solution aqueuse caustique,
- v) lavage.

La zéolitisation du liant se produit au cours de l'étape iv), par action de la solution caustique qui doit être au moins 0,5 molaire, et qui peut être une solution de soude et de potasse dans laquelle la potasse est présente à une teneur maximum de 30 % molaire (par rapport à l'ensemble soude + potasse). Il peut être avantageux d'utiliser une solution de soude.

Lorsque la zéolitisation est effectuée à la soude, il est particulièrement avantageux d'y procéder sur colonne parce qu'ainsi on peut éliminer le potassium de la structure, l'avantage étant que lors de l'échange lithique ultérieur, on ne retrouvera pas de potassium dans les effluents lithiques, ce qui allège d'autant leur traitement de recristallisation sélective.

On procède ici à une température suffisante pour obtenir une vitesse de zéolitisation raisonnable.

L'argile zéolitisable appartient à la famille de la kaolinite, de l'halloysite, de la nacrite ou de la dickite. On utilise très simplement le kaolin.

L'opération d'échange lithique ainsi que les éventuelles opérations d'échange de sites cationiques détaillées plus haut sont mises en oeuvre dans les conditions bien connues de l'homme du métier. On les conduit avantageusement sur colonne, pour minimiser la consommation de lithium et des autres cations éventuels.

On recommande l'activation des LiLSX sous c) selon le mode particulièrement respectueux de la structure qu'est l'activation à l'air chaud en colonne selon le brevet EP 0421.875.

### MANIERES DONT L'OBJET EST SUSCEPTIBLE D'APPLICATION INDUSTRIELLE

Les corps zéolitiques agglomérés selon l'invention pour lesquels on a procédé à l'échange au lithium et éventuellement à l'échange avec un ou plusieurs ions des Groupes IA, IIA, IIIA, IIIB de la classification périodique, les ions trivalents de la série des lanthanides ou terres-rares, l'ion zinc (II), l'ion cuivrique (II), l'ion chromique (III), l'ion ferrique (III), l'ion ammonium et/ou l'ion hydronium dont le taux d'échange correspondant à la somme des sites cationiques échangés à l'étape a) est supérieur ou égal à l'équivalent de 80 % et de préférence supérieur ou égal à 95 % du total des sites cationiques des zéolites,
le lithium représentant au moins l'équivalent de 50 % de ce taux d'échange total,
le calcium pouvant représenter au plus l'équivalent de 40 % de ce taux d'échange total,
le strontium pouvant représenter au plus l'équivalent de 40 % de ce taux d'échange total,
le zinc pouvant représenter au plus l'équivalent de 40 % de ce taux d'échange total,
les terres-rares pouvant représenter au plus l'équivalent de 50 % de ce taux d'échange total
sont d'excellents adsorbants de l'azote pour la séparation des gaz de l'air et d'excellents adsorbants de l'azote et/ou du monoxyde de carbone pour la purification de l'hydrogène ; les corps zéolitiques agglomérés dont le taux d'échange correspondant à la somme des sites cationiques échangés à l'étape a) est supérieur ou égal à l'équivalent de 95 % du total des sites cationiques des zéolites présentent une capacité d'adsorption d'azote sous 1 bar et à 25°C supérieure ou égale à 26 cm³/g et ils sont particulièrment préférés par la demanderesse. Les procédés d' adsorption mis en oeuvre sont le plus souvent de type PSA ou VSA.

Les exemples suivants illustrent l'invention.

### EXEMPLE 1 : Préparation d'une faujasite LSX, selon l'art antérieur, en présence de potasse

On synthétise une zéolite de type faujasite et de rapport Si/Al = 1, en mélangeant les solutions suivantes.

### Solution A :

On dissout 136 grammes de soude, 73 grammes de potasse (exprimée en pur) dans 280 grammes d'eau. On porte à ébullition entre 100-115°C, puis l'on dissout 78 grammes d'alumine. Une fois la dissolution effectuée, on laisse refroidir et on complète avec de l'eau jusqu'à 570 grammes pour tenir compte de l'eau évaporée.

### Solution B :

On mélange 300 grammes d'eau et 235,3 grammes de silicate de soude (25,5 % en SiO₂ ; 7,75 % en Na₂O) sous légère agitation. On ajoute la solution de silicate dans la solution d'aluminate en environ 2 minutes sous forte agitation au moyen d'une turbine défloculeuse de type RAYNERI tournant à 2500 tours / minute (vitesse périphérique = 3,7 m/s), puis on abandonne le gel formé à 60°C pendant 24 heures sans agitation. Après ce laps de temps, on observe une décantation importante, caractéristique du processus de cristallisation. On opère alors une filtration puis un lavage avec environ 15 ml d'eau par gramme de solide. Celui-ci est ensuite mis à sécher à 80°C en étuve. La composition du gel de synthèse est :
4 Na₂O, 1,3 K₂O, 1 Al₂O₃, 2 SiO₂, 91 H₂O

L'analyse chimique du solide résultant de la synthèse fournit une composition :
0,77 Na₂O, 0,23 K₂O, 2 SiO₂, 1 Al₂O₃

L'analyse par diffraction par rayons X confirme que la poudre formée est constituée de faujasite pratiquement pure, accompagnée de traces de zéolite A dont la teneur est estimée à moins de 2 %. Une mesure de capacité d'adsorption de toluène est effectuée, après calcination à 550°C pendant 2 heures, sous atmosphère inerte : on trouve une capacité de 22,5 % à 25°C et sous une pression partielle de 0,5.

### EXEMPLE 2 : préparation d'une LiLSX agglomérée

Une partie de la poudre est mise en forme en mélangeant 42,5 grammes (exprimés en équivalent calciné), 7,5 grammes d'une argile fibreuse (exprimés en équivalent calciné), 1 gramme de carboxyméthylcellulose et l'eau adéquate pour pouvoir procéder à une extrusion sous forme d'extrudés de 1,6 mm de diamètre et d'environ 4 mm de long. Les extrudés sont mis à sécher à 80°C et sont ensuite calcinés à 550°C pendant 2 heures sous atmosphère inerte. On procède alors à cinq échanges successifs au moyen de solutions de chlorure de lithium 1 M, à raison de 20 ml/g de solide. Chaque échange est poursuivi pendant 4 heures à 100°C, et des lavages intermédiaires sont effectués permettant d'éliminer l'excès de sel à chaque étape. A l'étape finale, on effectue 4 lavages à température ambiante, à raison de 20 mUg, de façon à descendre la teneur en chlorures résiduels sur le tamis à moins de 0,05 %. Le solide résultant est caractérisé selon les tests suivants :

| | |
|---|---|
| Capacité d'adsorption de toluène (25°C, P/Po = 0,5) | 21 % |
| Taux d'échange Li (%) (exprimé par Li₂O/(Li₂O + K₂O + Na₂O) | 98,4 % |

### EXEMPLE 3 : Préparation d'une LSX agglomérée à liant zéolitisé selon l'invention

On utilise la poudre de zéolite LSX de l'exemple 1 en l'agglomérant, avec un mélange d'une argile de type montmorillonite (15 %), d'une argile de type kaolin (85 %), d'un peu de carboxyméthylcellulose et d'eau. L'extrusion achevée, on effectue un séchage à 80°C et une calcination à 600°C pendant 2 heures, sous atmosphère inerte exempte de vapeur d'eau.

On prépare une solution contenant 16,7 grammes de soude en pastilles, 7,7 grammes de potasse (exprimés en pur), dans 100 ml d'eau. On immerge 10 grammes de grains de zéolite fraîchement calcinés dans 17 ml de cette solution et l'ensemble est porté à 95°C, sans agitation.

Des prélèvements de solide sont effectués après 3, 6 et 24 heures, afin de suivre l'évolution de la cristallinité en fonction du temps. Chacun de ces prélèvements est lavé par immersion dans de l'eau à raison de 20 ml/g ; 4 lavages sont réalisés de la LSX agglomérée.

On effectue les mesures de capacité d'adsorption de toluène dans les conditions précédemment décrites et l'on trouve les valeurs suivantes :

| | |
|---|---|
| LSX agglomérée (non traitée NaOH + KOH) | 18,2 % |
| LSX agglomérée (traitée NaOH + KOH, 3h de réaction) | 21,7 % |
| LSX agglomérée (traitée NaOH + KOH, 6 h de réaction) | 21,6 % |
| LSX agglomérée (traitée NaOH + KOH, 24 h de réaction) | 21,6 % |

Les diagrammes de diffraction de rayons X montrent essentiellement la présence de faujasite, avec quelques traces de zéolite A en quantité semblable à ce qui était mesuré sur la poudre avant agglomération. L'analyse chimique conduit à un rapport Si/AI global de 1,04, correspondant à l'objectif recherché. Le rapport Si/AI mesuré par R.M.N. du silicium est de 1,01 et correspond au rapport dans le réseau cristallin.

On démontre ainsi que l'on peut obtenir des grains de LSX dont la teneur en zéolite de type faujasite est au moins de 95 %, sur la base des capacités d'adsorption. On démontre par la même occasion que la réaction peut être rapide (moins de 3 heures), qu'elle n'exige pas de période de mûrissement, et qu'elle ne nécessite pas d'agent porogène en grande quantité, comme revendiqué dans US 4,603,040.

Le solide résultant du procédé est soumis à la même procédure d'échange que celle décrite dans l'exemple 1 et l'on obtient ainsi un adsorbant dont les caractéristiques sont les suivantes :

| | |
|---|---|
| Capacité d'adsorption de toluène (25°C -P/Po = 0,5) | 23,9 % |
| Taux d'échange Li(%) (exprimé par Li₂O/Li₂O+Na₂O+K₂O) | 98,1 % |

### EXEMPLE 4 : Préparation d'une LiLSX agglomérée à liant zéolitisé selon l'invention

On utilise la poudre de zéolite LSX de l'exemple 1 en l'agglomérant, avec un mélange d'une argile de type montmorillonite (15 %), d'une argile de type kaolin (85 %), d'un peu de carboxyméthylcellulose et d'eau. L'extrusion achevée, on effectue un séchage à 80°C et une calcination à 600°C pendant 2 heures, sous atmosphère inerte exempte de vapeur d'eau.

On immerge 10 grammes de ces agglomérés dans 17 ml d'une solution de soude à 220 g/l pendant 3 heures à 95°C. Les agglomérés sont ensuite lavés quatre fois par immersion dans l'eau.

On effectue les mesures de capacité d'adsorption de toluène dans les conditions précédemment décrites et l'on trouve les valeurs suivantes :

| | |
|---|---|
| LSX agglomérée (non traitée) | 18,2 % |
| LSX agglomérée (traitée NaOH) | 22,4 % |

Cette LSX agglomérée a une meilleure capacité de toluène, qui reflète une meilleure cristallinité, que celle de l'exemple précédent. D'autre part, on confirme par R.M.N. du silicium que le rapport Si/AI du réseau cristallin est de 1,01.

Le solide résultant du procédé est soumis à la même procédure d'échange que celle décrite dans l'exemple 1 et l'on obtient ainsi un adsorbant dont les caractéristiques sont les suivantes:

| | |
|---|---|
| Capacité d'adsorption de toluène (25°C -P/Po = 0,5) | 24,3 % |
| Taux d'échange Li(%) (exprimé par Li₂O/Li₂O+Na₂O+K₂O) | 98 % |

### EXEMPLE 5 :

Les adsorbants lithiques des exemples 2, 3 et 4 sont testés par la mesure de leurs isothermes d'adsorption d'azote et d'oxygène à 25°C, après dégazage à 300°C pendant 15 heures sous vide de 0,002 mm Hg. On résume les résultats ci-dessous :

| | **Cap. N**_{**2**} **(1 bar)** **(cm**^{**3**}**/g)** | **C N**_{**2**}**/CO**_{**2**} |
|---|---|---|
| Adsorbant témoin (Exemple 2) | 23 | 6,5 |
| Adsorbant (Exemple 3) | 26,3 | 6,9 |
| Adsorbant (Exemple 4) | 26 | 6,9 |

On en conclut que les adsorbants selon l'invention sont supérieurs aux adsorbants connus, principalement du fait de leur meilleure capacité d'adsorption, supérieure à 26 cm³/g.

### EXEMPLE 6 : Préparation d'une LiLSX et d'une LiCaLSX agglomérées à liant zéolitisé selon l'invention

On procède à l'échange de la LSX agglomérée préparée à l'exemple 3 au moyen d'une solution de chlorure de lithium 1M à 100 °C et on obtient un aggloméré dont le taux d'échange en lithium est de 91 % (Lig₁ LSX).

On traite ensuite cet aggloméré au moyen d'une solution de chlorure de calcium 0,23 M pendant une heure à 70 °C. Une fois l'opération effectuée, on filtre et lave avec 10 ml d'eau par gramme d'aggloméré. L'aggloméré obtenu a un taux d'échange global lithium+calcium de 91 % se répartissant en 69 % de lithium et 22 % de calcium (Li₆₉Ca₂₂ LSX).

On mesure les capacités d'adsorption de CO et d'azote à 30 °C après avoir calcinés sous air les agglomérés à 550 °C pendant 2 heures, puis les avoir dégazés sous vide à 300 °C.

Les résultats sont reportés dans le tableau ci-dessous, d'une part en capacités d'adsorption des deux gaz à 1 bar de pression, et d'autre part en rapports de capacités à 1 bar et à 0,2 bar, ce qui apporte une information sur la courbure de l'isotherme.

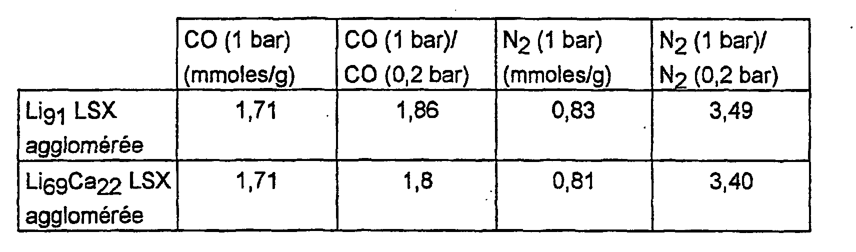

Ces résultats montrent que l'adsorbant aggloméré échangé lithium+calcium se comporte comme un adsorbant aggloméré échangé uniquement au lithium pour l'adsorption de CO et de N₂.

## Revendications

1. Procédé pour l'obtention de corps agglomérés en zéolite constitués d'au moins 95 % de zéolite X ayant un rapport Si/Al égal à 1 (LSX) échangée au lithium comprenant les opérations suivantes :
- a) on soumet des corps en zéolite LSX à un ou plusieurs échanges successifs avec une solution de chlorure de lithium à une température d'environ 100°C,
et éventuellement à l'échange des sites cationiques échangeables de la LSX avec des ions des Groupes IA, IIA, IIIA, IIIB de la classification périodique, les ions trivalents de la série des lanthanides ou terres-rares, l'ion zinc (II), l'ion cuivrique (II), l'ion chromique (III), l'ion ferrique (III), l'ion ammonium et/ou l'ion hydronium, les ions préférés étant les ions calcium, strontium, zinc et terres-rares,
- b) au lavage répété des corps échangés sous a),
- c) au séchage et à l'activation thermique des produits lavés sous b),
**caractérisé en ce que** les corps de zéolite LSX sont les produits issus des opérations suivantes :
- i) agglomération d'une poudre de zéolite LSX avec un liant contenant au moins 80 % d'une argile zéolitisable,appartenant à la famille de la kaolinite, de l'halloysite, de la nacrite ou de la dickite,
- ii) la mise en forme du mélange obtenu sous i),
- iii) son séchage, puis sa calcination à une température de 500 à 600°C,
- iv) la mise en contact du produit solide résultant de iii) avec une solution aqueuse caustique au moins 0,5 molaire, consistant essentiellement en la zéolitisation du liant en zéolite LSX,
- v) lavage.

2. Procédé selon la revendication 1, dans laquelle la solution caustique est une solution de soude et de potasse dans laquelle la potasse est présente à une teneur maximum de 30 % molaire (par rapport à l'ensemble soude + potasse).

3. Procédé selon la revendication 1, dans laquelle la solution caustique est une solution de soude.

4. Procédé selon l'une quelconque des revendications 1 à 3 **caractérisé en ce que** le liant zéolitisable est le kaolin.

5. Corps agglomérés en zéolite constitués d'au moins 95 % de zéolite X ayant un rapport Si/Al égal à 1 échangée au lithium et éventuellement échangés avec un ou plusieurs ions des Groupes IA, IIA, IIIA, IIIB de la classification périodique, les ions trivalents de la série des lanthanides ou terres-rares, l'ion zinc (II), l'ion cuivrique (II), l'ion chromique (III), l'ion ferrique (III), l'ion ammonium et/ou l'ion hydronium, susceptibles d'être obtenus selon le procédé de l'une quelconque des revendications 1 à 4.

6. Corps agglomérés en zéolite échangée au lithium selon la revendication 5.

7. Corps agglomérés en zéolite échangée au lithium et au calcium et/ou au strontium et/ou au zinc et/ou avec une ou plusieurs terres-rares selon la revendication 5.

8. Corps agglomérés en zéolite selon l'une quelconque des revendications 5 à 7, ayant une capacité d'adsorption d'azote sous 1 bar et à 25°C supérieure ou égale à 26 cm³/g.

9. Utilisation des corps agglomérés en zéolite tels que définis dans l'une quelconque des revendications 5 à 8 dont le taux d'échange correspondant à la somme des sites cationiques échangés à l'étape a) est supérieur ou égal à l'équivalent de 80 % et de préférence supérieur ou égal à à 95 % du total des sites cationiques des zéolites,
le lithium représentant au moins l'équivalent de 50 % du taux d'échange total,
le calcium pouvant représenter au plus l'équivalent de 40 % du taux d'échange total,
le strontium pouvant représenter au plus l'équivalent de 40 % du taux d'échange total,
le zinc pouvant représenter au plus l'équivalent de 40 % du taux d'échange total,
les terres-rares pouvant représenter au plus l'équivalent de 50 % du taux d'échange total,
comme adsorbants dans la séparation non-cryogénique de gaz industriels.

10. Utilisation selon la revendication 9 des corps agglomérés en zéolite pour l'adsorption d'azote dans la séparation des gaz de l'air.

11. Utilisation selon la revendication 9 des corps agglomérés en zéolite pour l'adsorption d'azote et/ou de monoxyde de carbone dans la purification de l'hydrogène.

12. Utilisation selon l'une quelconque des revendications 9 à 11 des corps agglomérés en zéolite dans des procédés de type PSA ou VSA.

## Patentansprüche

1. Verfahren zur Herstellung von agglomerierten Zeolithkörpern aus mindestens 95% lithiumausgetauschtem Zeolith X mit einem Si/Al-Verhältnis von 1 (LSX), bei dem man:
a) Zeolith-LSX-Körper einmal oder mehrmals hintereinander bei einer Temperatur von ungefähr 100°C mit Lithiumchloridlösung austauscht
und gegebenenfalls die austauschbaren kationischen Zentren des Zeoliths LSX mit Ionen aus den Gruppen IA, IIA, IIIA und IIIB des Periodensystems der Elemente, dreiwertigen Ionen aus der Reihe der Lanthaniden bzw. Seltenerdmetalle, dem Zink(II)-Ion, dem Kupfer(II)-Ion, dem Chrom(III)-Ion, dem Eisen(III)-Ion, dem Ammoniumion und/oder dem Hydroniumion austauscht, wobei Calcium-, Strontium-, Zink- und Seltenerdmetallionen bevorzugt sind,
b) die unter a) ausgetauschten Körper wiederholt wäscht,
c) die unter b) gewaschenen Produkte trocknet und thermisch aktiviert,
**dadurch gekennzeichnet, daß** es sich bei den Zeolith-LSX-Körpern um die Produkte der folgenden Arbeitsgänge handelt:
i) Agglomerieren eines Zeolith-LSX-Pulvers mit einem Bindemittel, das mindestens 80% eines zeolithisierbaren Tons aus der Kaolinit-, Halloysit-, Nacrit- oder Dickit-Familie enthält,
ii) Formen der unter (i) erhaltenen Mischung,
iii) Trocknen und anschließendes Calcinieren bei einer Temperatur von 500 bis 600°C,
iv) Kontaktieren des festen Produkts aus iii) mit einer mindestens 0,5-molaren kaustischen wäßrigen Lösung, im wesentlichen bestehend aus der Zeolithisierung des Bindemittels zu Zeolith LSX,
v) Waschen.

2. Verfahren nach Anspruch 1, bei dem es sich bei der kaustischen Lösung um eine Lösung von Natriumhydroxid und Kaliumhydroxid, in der das Kaliumhydroxid in einer Höchstmenge von 30 Mol-% (bezogen auf die Gesamtmenge an Natriumhydroxid und Kaliumhydroxid) vorliegt, handelt.

3. Verfahren nach Anspruch 1, bei dem es sich bei der kaustischen Lösung um eine Natriumhydroxidlösung handelt.

4. Verfahren nach einem der Ansprüche 1 bis 3, **dadurch gekennzeichnet, daß** es sich bei dem zeolithisierbaren Bindemittel um Kaolin handelt.

5. Agglomerierte Zeolithkörper aus mindestens 95% lithiumausgetauschten Zeolith X mit einem Si/Al-Verhältnis von 1 (LSX), die gegebenenfalls mit einem oder mehreren Ionen aus den Gruppen IA, IIA, IIIA und IIIB des Periodensystems der Elemente, dreiwertigen Ionen aus der Reihe der Lanthaniden bzw. Seltenerdmetalle, dem Zink(II)-Ion, dem Kupfer(II)-Ion, dem Chrom(III)-Ion, dem Eisen(III)-Ion, dem Ammoniumion und/oder dem Hydroniumion ausgetauscht sind und nach dem Verfahren nach einem der Ansprüche 1 bis 4 erhältlich sind.

6. Agglomerierte Körper aus lithiumausgetauschtem Zeolith nach Anspruch 5.

7. Agglomerierte Körper aus lithiumausgetauschtem und calcium- und/oder strontium- und/oder zinkausgetauschtem und/oder mit einem oder mehreren Seltenerdmetallen ausgetauschtem Zeolith nach Anspruch 5.

8. Agglomerierte Zeolithkörper nach einem der Ansprüche 5 bis 7 mit einer Stickstoffadsorptionskapazität bei 1 bar und 25°C größe gleich 26 cm³/g.

9. Verwendung der agglomerierten Zeolithkörper nach einem der Ansprüche 5 bis 8 mit einem der Summe der in Schritt a) ausgetauschten kationischen Zentren entsprechenden Austauschgrad größer gleich dem Äquivalent von 80% und vorzugsweise größer gleich 95% aller kationischer Zentren der Zeolithe, wobei
Lithium mindestens dem Äquivalent von 50% des Gesamtaustauschgrads entspricht,
Calcium höchstens dem Äquivalent von 40% des Gesamtaustauschgrads entsprechen kann,
Strontium höchstens dem Äquivalent von 40% des Gesamtaustauschgrads entsprechen kann,
Zink höchstens dem Äquivalent von 40% des Gesamtaustauschgrads entsprechen kann,
Seltenerdmetalle höchstens dem Äquivalent von 50% des Gesamtaustauschgrads entsprechen können,
als Adsorptionsmittel bei der nichtkryogenen Trennung von technischen Gasen.

10. Verwendung der agglomerierten zeolithkörper nach Anspruch 9 zur Adsorption von Stickstoff bei der Trennung der Gase der Luft.

11. Verwendung der agglomerierten Zeolithkörper nach Anspruch 9 zur Adsorption von Stickstoff und/oder Kohlenmonoxid bei der Reinigung von Wassserstoff.

12. Verwendung der agglomerierten Zeolithkörper nach einem der Ansprüche 9 bis 11 bei PSA- oder VSA-Verfahren.

## Claims

1. Process for producing agglomerated bodies made of zeolite composed of at least 95% of lithium-exchanged zeolite X having an Si/Al ratio equal to 1 (LSX), which process comprises the following operations:
- a) bodies made of zeolite LSX are subjected to one or more successive exchanges with a lithium chloride solution at a temperature of approximately 100°C
and optionally to exchange of the exchangeable cationic sites of the LSX with ions from Groups IA, IIA, IIIA and IIIB of the Periodic Classification, trivalent ions from the series of lanthanides or rare earth metals, the zinc(II) ion, the cupric(II) ion, the chromic(III) ion, the ferric(III) ion, the ammonium ion and/or the hydronium ion, the preferred ions being the calcium, strontium, zinc and rare earth metal ions,
- b) with repeated washing of the bodies exchanged in a)
- c) with drying and with thermal activation of the products washed in b),
**characterized in that** the bodies made of zeolite LSX are the products resulting from the following operations:
- i) agglomerating a zeolite LSX powder with a binder containing at least 80% of a clay which can be converted to zeolite, belonging to the kaolinite, halloysite, nacrite or dickite family,
- ii) shaping the mixture obtained in i),
- iii) drying it and then calcining it at a temperature of 500 to 600°C,
- iv) bringing the solid product resulting from iii) into contact with an at least 0.5 molar caustic aqueous solution, consisting essentially of the conversion of the binder to zeolite,
- v) washing.

2. Process according to Claim 1, in which the caustic solution is a sodium hydroxide and potassium hydroxide solution in which the potassium hydroxide is present at a maximum content of 30 molar % (with respect to the combined sodium hydroxide + potassium hydroxide).

3. Process according to Claim 1, in which the caustic solution is a sodium hydroxide solution.

4. Process according to any one of Claims 1 to 3, **characterized in that** the binder which can be converted to zeolite is kaolin.

5. Agglomerated bodies made of zeolite composed of at least 95% of lithium-exchanged zeolite X having an Si/Al ratio equal to 1, which bodies are optionally exchanged with one or more ions from Groups IA, IIA, IIIA and IIIB of the Periodic Classification, trivalent ions from the series of lanthanides or rare earth metals, the zinc(II) ion, the cupric(II) ion, the chromic(III) ion, the ferric(III) ion, the ammonium ion and/or the hydronium ion and which are capable of being obtained according to the process of any one of Claims 1 to 4.

6. Agglomerated bodies made of zeolite according to Claim 5 which are exchanged with lithium.

7. Agglomerated bodies made of zeolite according to Claim 5 which are exchanged with lithium and with calcium and/or with strontium and/or with zinc and/or with one or more rare earth metals.

8. Agglomerated bodies made of zeolite according to any one of Claims 5 to 7, having a nitrogen capacity at 1 bar and at 25°C of greater than or equal to 26 cm³/g.

9. Use of the agglomerated bodies made of zeolite as defined in any one of Claims 5 to 8, the degree of exchange of which, corresponding to the sum of the cationic sites exchanged in the stage a), is greater than or equal to the equivalent of 80% and preferably greater than or equal to 95% of all the cationic sites of the zeolites,
the lithium representing at least the equivalent of 50% of the total degree of exchange,
it being possible for the calcium to represent at most the equivalent of 40% of the total degree of exchange,
it being possible for the strontium to represent at most the equivalent of 40% of the total degree of exchange,
it being possible for the zinc to represent at most the equivalent of 40% of the total degree of exchange,
it being possible for the rare earth metals to represent at most the equivalent of 50% of the total degree of exchange,
as adsorbents in the non-cryogenic separation of industrial gases.

10. Use according to Claim 9 of the agglomerated bodies made of zeolite for the adsorption of nitrogen in the separation of gases from air.

11. Use according to Claim 9 of the agglomerated bodies made of zeolite for the adsorption of nitrogen and/or of carbon monoxide in the purification of hydrogen.

12. Use according to any one of Claims 9 to 11 of the agglomerated bodies made of zeolite in processes of PSA or VSA type.
